Europäisches Patentamt

European Patent Office

Office européen des brevets

(11) Publication number: **0 047 352**
**B1**

# (12) EUROPEAN PATENT SPECIFICATION

(45) Date of publication of patent specification: **13.03.85**

(21) Application number: **80303907.2**

(22) Date of filing: **03.11.80**

(51) Int. Cl.⁴: **F 16 N 19/00,** G 01 F 23/02,
F 16 N 7/34

(54) Fluid handling devices such as filters and lubricators and containers therefor.

(30) Priority: **05.09.80 GB 8028833**

(43) Date of publication of application:
**17.03.82 Bulletin 82/11**

(45) Publication of the grant of the patent:
**13.03.85 Bulletin 85/11**

(84) Designated Contracting States:
**AT BE CH DE FR GB IT LI LU NL SE**

(56) References cited:
**FR-A- 329 860**
**FR-A-1 418 956**
**GB-A- 141 781**
**US-A-1 339 561**
**US-A-2 609 692**
**US-A-2 672 757**

**MACHINE DESIGN, vol. 33, 25th May, 1961,
page 202, Penton Inc., Cleveland, "Filter
reservoir"**

(73) Proprietor: **SCOVILL INC
500 Chase Parkway
Waterbury Connecticut 06708 (US)**

(72) Inventor: **Martin, Keith Sidney
1 Hilcote Hollow
Stafford (GB)**

(74) Representative: **Gura, Henry Alan et al
MEWBURN ELLIS & CO. 2/3 Cursitor Street
London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to fluid flow devices including fluid filters and lubricators of the kind comprising a dependent liquid container. In a filter this container will serve as a collecting bowl in which the liquid separated from a throughflow is deposited to be drained off, as the separation of liquid from a pressure air supply. In a lubricator the container will provide a reservoir of liquid lubricant to be taken up by a pressure gas throughflow.

Although it is obviously desirable to make such containers from a transparent material so that the level of liquid can be readily seen, the use of glass is often unacceptable because of its brittleness. In recent years plastics materials, in particular polycarbonates have been used as a substitute, but it is found that these materials are prone to attack by impurities that may be found in industrial pressure air supplies. There are known composite constructions that avoid these disadvantages by providing a tubular sight glass mounted on a mainly metal construction, but these are relatively complex to produce and assemble, with consequently high costs, and generally require a number of separate seals giving an increased risk of leakage under pressure.

The present invention relates to a fluid container provided with a sight glass comprising an elongate light-transmitting member for indicating the fluid level in the container. See e.g. FR—A—1418956. According to the invention said light-transmitting member is tapered along its length, and is slidable into and sealingly fits a tapered slot or recess in a side of the container.

In such an arrangement a sealing ring may be interposed between the light-transmitting member and the adjoining surface of the container to encompass a wall area of the container containing at least one communicating opening in said wall to the container interior at regions adjacent both the top and the bottom of said light-transmitting member.

Preferably, the light-transmitting member is insertable in said slot from the top and means are arranged to be disposed above said member to limit or prevent upwards displacement of the member.

Assembly is facilitated if the light-transmitting member and said slot or recess are tapered both in their width and their depth transverse to the main dimension of the elongate light-transmitting member, i.e. transversely to the direction of insertion.

Stop means may be provided at one end of the slot or recess to limit the insertion of the light-transmitting member therein, and this can be conveniently achieved with a slot or recess comprising a U-form flange, the bottom of which provides said stop means.

The invention will be described in more detail with reference to an embodiment illustrated in the accompanying drawings, wherein:

Fig. 1 is a central vertical section through a filter incorporating the invention,

Fig. 2 is a side view in the direction A in Fig. 1 of the filter bowl and sight glass,

Fig. 3 is a rear view of the sight glass with its sealing ring,

Fig. 3a is a cross-section of the sight glass in a horizontal plane also illustrating a float element therein,

Fig. 4 is a central vertical section of the head or body of the filter in a plane normal to the sectional plane of Fig. 1, and

Fig. 5 illustrates a filter-regulator-lubricator unit in which both the filter and the lubricator have bowls with a sight glass and a quick-release locking arrangement of the form shown in the preceding figures.

The filter comprises a die-case body 2 provided with inlet and outlet ports 4, 6 that communicate with a conventional filtration arrangement (not shown for the sake of clarity) attached to screwed boss 8 of the body and disposed within a dependent bowl 10 detachably held in the head by a quick-release locking arrangement to be described in detail below. The bowl itself comprises a metal die-casting in which there is mounted a sight glass 12 showing the liquid level within the bowl, and an automatic dump valve 14 for draining the bowl.

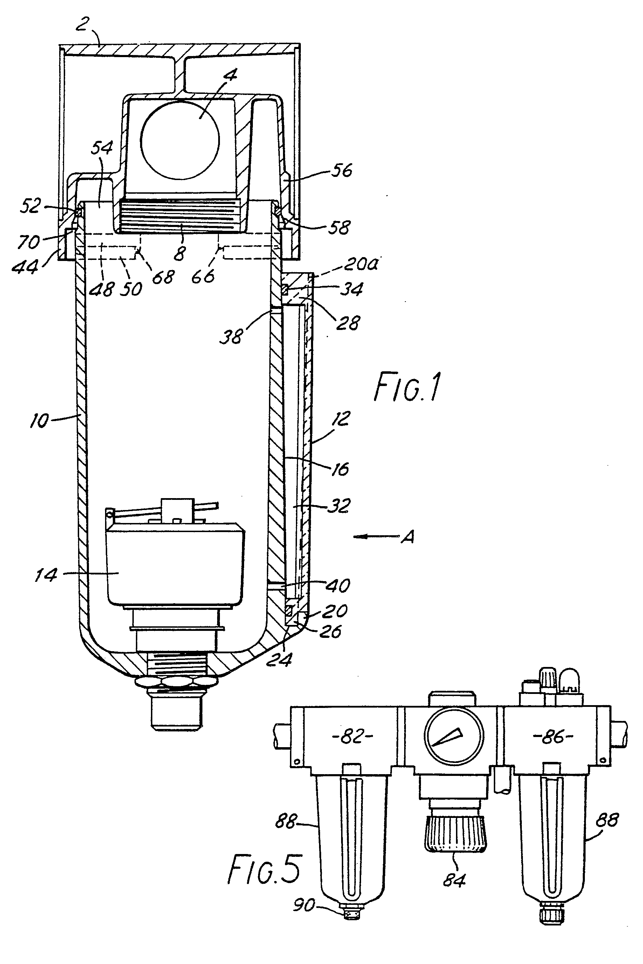

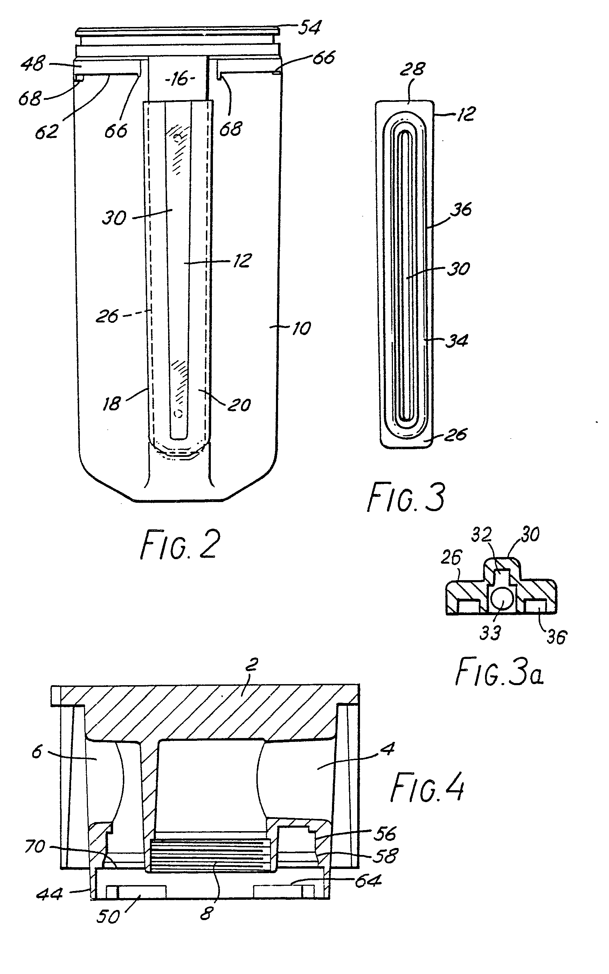

The bowl generally has a cylindrical form, tapering slightly downwardly. At one side, a flat wall portion 16 is formed extending from the top of the bowl nearly to its bottom and an integrally formed L-section flange 18 standing proud of this wall portion extends around its bottom region and along its lateral edges to a level close to the top of the bowl. The two main lengths of the flange at the opposite lateral edges of the flat wall portion define an elongate slot or recess 24, closed at the bottom by the lowermost portion of the flange. The two main lengths of the flange diverge slightly in the upward direction as can be seen in Fig. 2. The flange comprises an outer lip 20 having a planar outer face radially of the bowl but tapering in thickness towards its upper end as can be seen from the broken line 20a indicating its inner face, and at a slightly diverging spacing from the flat wall portion 16 in this same upward direction, as can also be seen in Fig. 1. The lip 20 thus forms a channel-like margin to the borders of the U-form recess 24 between the flange outer lip and the flat wall portion, the height of which recess radially of the bowl increases with the divergence of the flange lip from the wall portion 16, while the width of the U-form recess 24 similarly increases with distance from the bottom of the bowl, due to the divergence of the upwardly extending main lengths of the flange.

The channeled recess 24 is used to secure the sight glass 12 of moulded glass or other transparent or translucent material, an integral lip 26 extending around the side and bottom edges of the sight glass having a form complementary to that of the channel-like margin of the recess fitting under the flange outer lip 20. The sight glass includes a thickened top portion 28, the rear face of which is coplanar with the rear face of the lip 26, and a ridged central portion 30 between the laterally opposite portions of the lip 26 that has its outer face substantially flush with the outer face of the flange lip 20. The sight glass thus defines a trough-like internal space 32 closed at the rear or radially inner face by the flat 16 wall portion of the bowl. Within the space 32 there can be provided a float element 33 that can move freely up and down the sight glass to indicate the liquid level in the space.

An O-ring 34 is seated in a recess 36 in the rear face of the lip 26 and top portion 28 of the sight glass to seal the space 32, and spaced apertures 38, 40 in the wall portion 16 adjacent to the top and bottom of the space communicate with the main interior space of the bowl. The O-ring can be a standard circular-form ring that is pulled into the elongate shape required to match the recess 36, but that then fits the recess without being under tension.

Because of the upwardly widening space between the main lengths of the flange 18 and of the corresponding increasing spacing of the flange lip from the bowl flat wall portion, with the bowl removed from the filter body the sight glass can be easily slid into the recess from the top with an initial radial and lateral play or clearance. After the glass has moved down some two thirds of the length of the flange, the radial play has been taken up and the O-ring 34 begins to be urged against the flat. The compression force on it increases with continued movement so that it is in an operative state for effective sealing as the sight glass is pushed further down. When the sight glass is pushed fully home to the position shown in Figs. 1 and 2 to abut against the bottom portion of the flange 18, there is a significant frictional effect from the compression force on the O-ring that resists upwards displacement of the sight glass.

When the bowl is secured to the filter body, the top of the sight glass is immediately below and only slightly spaced from the bottom rim 44 of the body. If there should be any tendency of the sight glass to lift in use, e.g. due to a combination of internal fluid pressure forces and vibration, it is only able to move to a very limited extent before it abuts against the rim. This ensures that the O-ring will remain securely engaged between the sight glass and the bowl flat wall portion to act as an effective seal, and also that both apertures 38, 40 remain in communication with the sight glass internal space 32 so that false readings will not be obtained.

The bowl is held in the body by two interengaging series of oblong lugs 48, 50, that are respectively on the bowl outer periphery adjacent its top rim 54 and on the inner face of cylindrical bottom lip of the body. The bowl top rim carries an O-ring 52 that is urged against an inner peripheral sealing face 56 within the body when the bowl lugs and the body lugs are engaged, as shown in Fig. 1. The cylindrical sealing face is preceded by a tapered lead-in face 58 below it to guide the sealing ring into place.

There are four equispaced lugs in each series with the peripheral gaps between adjacent lugs of each series allowing the free passage between them of a lug of the other series axially of the bowl. The flat wall portion 16 of the bowl is located in the spacing between two adjacent lugs 48. The lugs 48 on the bowl have flat bottom faces 62 of the same length as the top faces 64 of those on the head, but they extend vertically beyond those flat bottom faces with terminal portions that comprise projections 66, 68 depending below the bottom faces. The projections 66 at the right-hand end (as seen in Fig. 2) of each lug, the leading end, are shorter than the projections 68 at the other end, the trailing end.

The outer dimension of the bowl lugs radially of the bowl is greater than the inner radius of the internal shoulder 70 at the top of the body bottom lip. The bowl rim can therefore be inserted upwardly into the body, its lugs 48 passing between the body lugs 50, until they abut against the shoulder 70. In this position, the bottom surfaces 62 of the bowl lugs are at a higher level than the top surfaces 64 of the body lugs. This is also the case with the shorter, leading end projections 66, but the longer projections 68 still depend below the level of these top surfaces 64. The longer projections 68 therefore prevent rotation of the inserted bowl anticlockwise, but it can be rotated clockwise, the shorter projections 66 passing over the body lugs until the individual lugs of the two series are located one directly over the other. At that stage further clockwise rotation is prevented by abutment of the longer projections 68 with the body lugs.

If released in this position, the bowl will move downwards to rest upon the body lugs, due to gravity and the resilience of the O-ring 52 which, it will be understood, has maintained a sliding seal during all the movements between the bowl and body after it has passed the lead-in 58. The projections 66, 68 of each bowl lug 48 then lie one at each end of the associated body lug 50 as shown in Fig. 1, so that both series of projections will prevent rotation of the bowl from its fully engaged position with the body.

The angular orientation of the bowl on the body, with the sight glass 12 on a face normal to the axes of the ports 4, 6, is determined by the lugs 48, 50 and with four equispaced lugs in each series the bowl can be assembled on the body in any of four alternative angular orientations at 90° intervals. Other alternatives are possible with different numbers of lugs.

To remove the bowl it must first be raised to lift the smaller projections 66 clear of the body lugs 50, whereupon it can be turned anticlockwise to bring the bowl lugs 48 into register with the spaces between the body lugs. The longer projections 68 then prevent further rotation so that the user will know that the bowl can be lowered and he cannot lose the disengagement position by rotating the bowl too far.

In operation with a pressure air system, there will be a positive pressure inside the bowl which will usually be sufficient to prevent the bowl being lifted. The described engagement means therefore act as a safety device, preventing the removal of the bowl while the pressure air supply is connected to it. It will be understood from the previous description that this also ensures the sight glass cannot be removed while the filter remains connected to the pressure air supply.

It is to be understood that although the illustrated arrangement shows both shorter and longer projections on the bowl lugs, they can be disposed otherwise to function in the manner described. For example, an equivalent arrangement to that described could consist of shorter and longer upwards projections on the left-hand and right-hand ends of each body lug (i.e. oppositely to the illustrated arrangement on the bowl lugs) and each bowl lug then having a plain bottom face fitting between these upwards projections and being similarly locatable in the engagement position by clockwise rotation and removable by anticlockwise rotation. In a similar manner, the shorter projections can be so disposed as to engage a recess intermediate the length of their co-operating lugs when the bowl is engaged with the body, and in that case the shorter and longer projections can be disposed one on each of a pair of co-operating bowl and body lugs.

It will also be understood that while the illustrated example show the lugs of each series with corresponding configurations, only one pair of projections is necessary to provide the described functions, and these need not be formed on the same lug of a series.

Although the invention has been exemplified in the foregoing description by reference to a pressure air filter, it may be employed analogously in other fluid flow devices, such as in a pressure air lubricator, as is schematically shown in Fig. 5 in a composite assembly for a pressure air supply line, comprising a filter 82, pressure regulator 84 and lubricator 86. The bowls 88 of the filter and lubricator each have sight glasses of the form described above and are interengaged with the bodies of the filter and lubricator respectively by the locking lugs described above. The filter 82 differs from that described earlier in that it has a manual drain valve 90. The assembly in Fig. 5 includes coupling means of the form described in our co-pending application referred to above.

## Claims

1. A fluid container provided with a sight glass comprising an elongate light-transmitting member (12) for indicating the fluid level in the container (10), characterised in that said light-transmitting member (12) is tapered along its length,. and is slidable into and sealingly fits a tapered slot or recess (24) in a side of the container (10).

2. A fluid container according to claim 1 wherein the light-transmitting member (12) and said slot or recess (24) are tapered both in width and in depth transverse to the main longitudinal dimension of the light-transmitting member.

3. A fluid container according to claim 1 or claim 2 wherein a sealing member (34) is engaged between the light-transmitting member (12) and a wall portion (16) of the container separating the light-transmitting member from the main volume of the container, said sealing member surrounding an area of said wall portion in which there is at least one opening (38, 40) communicating with the main volume of the container adjacent both the top and the bottom of the light-transmitting member.

4. A fluid container according to any one of claims 1 to 3 wherein said tapered slot or recess (24) converges downwardly so that the light-transmitting member can be inserted into it from above, and means (44) secured to the container above the light-transmissing member to limit or prevent upwards displacement of the member in use.

5. A fluid container according to any one of the preceding claims wherein stop means are provided at one end of the slot or recess to limit the insertion of the light-transmitting member therein.

6. A fluid container according to claim 5 wherein the slot or recess comprises elongate side portions formed by a flange (18) having an elongate U-form lip (20) behind which is engaged a lip (26) forming the side and bottom edges of the light-transmitting member.

7. A fluid container according to any one of the preceding claims wherein a float element (33) is retained in the interior space (32) of the light-transmitting member (12) between the member and the adjacent wall (16) of the container.

8. A fluid container according to any one of the preceding claims wherein the slot or recess (24) for the light-transmitting member (12) is disposed on a peripheral wall portion (16) of the container that is disposed in a region between two adjacent mounting lugs (48) of a series of peripherally spaced mounting lugs in the region of an upper rim (54) of the container.

9. A fluid container according to claim 8, in combination with an upper body from which the container is suspended, wherein said two mounting lugs (48) are members of a group of at least two peripherally spaced lugs (48) on a rim of the container for engagement with a group of at least two spaced lugs (50) on a wall region of the upper body coaxial with the container rim to support the container by location of its lugs (48) over the lugs (50) of the body, a plurality of stop elements (66, 68) projecting vertically from one or more of the lugs (48, 50) for co-operation with the lug or lugs engaging therewith when the container and body are attached together, there being at least two peripherally spaced elements (66, 68) that project to different levels and the respective groups of lugs (48, 50) being locatable during assembly at relative heights that allow the lugs of one group to pass the smaller element or elements (66) when there is relative rotation between the container and body in one direction, the larger element or elements (68) acting as abutting stop means limiting said relative rotation so that after passing the smaller element or elements said stop means will determine the rotational alignment of the co-operating lugs for interengagement to support the container, the smaller element or elements (66) on a lug or lugs then co-operating with the engaging lug or lugs to prevent rotation opposite to said one direction, whereby the container can only be removed after a vertical movement permitting said smaller element or elements to clear the co-operating lug or lugs, said rim and said wall region of the upper body having radially opposed faces between which sliding seal means (52) are interposed to maintain a seal during the relative vertical movements that permit the lugs to pass the stop elements.

10. A fluid container and upper body according to claim 9 wherein the lugs (48, 50) of each group of lugs are equally spaced peripherally of the container or the upper body.

**Revendications**

1. Récipient à fluide, avec voyant en verre, comprenant un élément allongé transmetteur de lumière (12), pour indiquer le niveau de liquide dans le récipient (10), caractérisé en ce que ledit élément transmetteur de lumière (12) présente une conicité dans sa longueur et peut glisser dans une fente ou redan (24), de forme conique, réalisé dans un côté du récipient (10) et à joints étanches.

2. Récipient à fluide selon la revendication 1, dans lequel l'élément transmetteur de lumière (12) et ladite fente ou redan (24) présentent une conicité à la fois en largeur et en profondeur, transversalement par rapport à la dimension longitudinale principale de l'élément transmetteur de lumière.

3. Récipient à fluide selon les revendications 1 ou 2, dans lequel un élément d'étanchéité (34) s'emboîte entre l'élément transmetteur de lumière (12) et une partie de paroi (16) du récipient, isolant l'élément transmetteur de lumière du volume principale du récipient, ledit élément d'étanchéité entourant une zone de ladite partie de paroi, dans laquelle il existe au moins une ouverture (38, 40) en communication avec le volume principal du récipient près du sommet et de la base de l'élément transmetteur de lumière.

4. Récipient à fluide selon l'une des revendications 1 à 3, dans lequel ladite fente ou redan conique (24) présente une convergence vers le bas, de façon à ce que l'élément transmetteur de lumière puisse être inséré dans celui-ci par le dessus et un dispositif (44), fixé au récipient, au-dessus de l'élément transmetteur de lumière, afin de limiter ou d'empêcher le soulèvement de cet élément pendant le fonctionnement.

5. Récipient à fluide selon l'une des revendications précédentes, dans lequel un dispositif d'arrêt est prévu à une extrémité de la fente ou du redan, afin de limiter l'insertion dans celui-ci de l'élément transmetteur de lumière.

6. Récipient à fluide selon la revendication 5, caractérisé en ce que la fente ou redan comprend des parties latérales allongées, constituées par une bride (18) ayant un lèvre (20) allongée et en forme de U, derrière laquelle s'engage une lèvre (26), constituant les arêtes latérales et inférieures de l'élément transmetteur de lumière.

7. Récipient à fluide selon l'une des revendications précédentes, dans lequel un flotteur (33) est retenu dans l'espace intérieur (32) de l'élément transmetteur de lumière (12), entre cet élément et la paroi voisine (16) du récipient.

8. Récipient à fluide selon l'une des revendications précédentes, dans lequel la fente ou redan (24), pour l'élément transmetteur de lumière (12) est disposée sur une partie de paroi périphérique (16) du récipient, qui est située dans une zone entre deux pattes de montage voisines (48) d'une série de pattes de montage disposées à intervalles sur la périphérie, dans la zone d'un rebord supérieur (54) du récipient.

9. Récipient à fluide selon la revendication 8, en combinaison avec un corps supérieur, auquel le récipient est suspendu, dans lequel les deux pattes de montage (48) font partie d'un groupe d'au moins deux pattes (48), disposées à intervalles sur la périphérie d'un rebord du récipient, afin de pouvoir s'insérer dans un groupe d'au moins deux pattes espacées (50) sur une partie de la paroi du corps supérieur, disposées coaxialement par rapport au rebord du récipient, de façon à supporter le récipient par suite du placement de ces pattes (48) sur les pattes (50) du corps, plusieurs éléments d'arrêt (66, 68) faisant saillie verticalement depuis une ou plusieurs des pattes (48, 50) pour agir en combinaison avec la ou les patte(s) s'insérant dans celles-ci lorsque le récipient et le corps sont montés l'un sur l'autre, deux éléments (66, 68), disposés à intervalle sur leur périphérie, étant prévus au moins et faisant saillie à des niveaux différents et les groupes correspondant de pattes (48, 50) pouvant se placer, au cours du montage, à des hauteurs relatives telles que les pattes d'un groupe puissent dépasser l'élément ou les éléments plus petits (66) quand on effectue un mouvement de rotation relatif de la cuvette par rapport au corps dans une direction, le ou les éléments (68) plus grands jouant le rôle de butée d'arrêt et limitant ladite rotation relative, de façon à ce que, après le dépassement du ou des éléments plus petits, ledit dispositif d'arrêt détermine l'orientation des pattes en correspondance, de façon à ce qu'elles s'emboîtent l'une sur l'autre pour supporter le récipient, le ou les plus petits éléments (66) d'une ou plusieurs pattes fonctionnant alors en combinaison avec la ou les patte(s) de blocage, de façon à empêcher la rotation en sens opposé à ladite direction, dans lequel le récipient peut être enlevé uniquement après un mouvement vertical permettant aux dits éléments plus petits de dégager la ou les patte(s) correspondante(s), ledit rebord et ladite zone de paroi du corps supérieur présentant des surfaces radialement opposées, entre lesquelles sont disposés des dispositifs d'étanchéité à glissement (52), de façon à assurer l'étanchéité pendant les mouvements relatifs verticaux qui permettent aux pattes de dépasser les éléments d'arrêt.

10. Récipient à fluide et corps supérieur selon la revendication 9, dans lequel les pattes (48, 50) de chaque groupe de pattes sont espacées à intervalles réguliers sur la périphérie du récipient ou du corps supérieur.

## Patentansprüche

1. Fluidbehälter mit einem Schauglas, das ein langgestrecktes lichtdurchlässiges Element (12) für die Anzeige des Fluidstandes im Behälter (10) besitzt, dadurch gekennzeichnet, daß das lichtdurchlässige Element (12) über seine Länge verjüngt ist und in einen verjüngten Schlitz oder eine solche Ausnehmung (24) in einer Seite des Behälters einschiebbar ist und dichtend einpaßt.

2. Fluidbehälter nach Anspruch 1, dadurch gekennzeichnet, daß das lichtdurchlässige Element (12) und der Schlitz oder die Ausnehmung (24) sowohl in Breite als auch Tiefe in Querrichtung zur Hauptlängsabmessung des lichtdurchlässigen Elementes verjüngt sind.

3. Fluidbehälter nach Anspruch 1 oder 2, dadurch gekennzeichnet, daß ein Dichtungselement (34) zwischen dem lichtdurchlässigen Element (12) und einem Wandabschnitt (16) des Behälters in Eingriff steht, der das lichtdurchlässige Element vom Hauptvolumen des Behälters trett, und daß das Dichtungselement eine Zone des Wandabschnittes umgibt, in welcher wenigstens eine Öffnung (38, 40) vorgesehen ist, die mit dem Hauptvolumen des Behälters angrenzend sowohl an das obere Ende als auch an den Boden des lichtdurchlässigen Elementes in Verbindung steht.

4. Fluidbehälter nach Anspruch 1 bis 3, dadurch gekennzeichnet, daß der verjüngte Schlitz oder die verjüngte Ausnehmung (24) nach unten konvergiert, sodaß das lichtdurchlässige Element von oben her darin eingesetzt werden kann, und daß eine Einrichtung (44) vorgesehen ist, die am Behälter oberhalb des lichtdurchlässigen Elementes befestigt ist, um eine Verschiebung nach oben des lichtdurchlässigen Elementes während der Verwendung zu beschränken oder zu verhindern.

5. Fluidbehälter nach einem der vorhergehenden Ansprüche, dadurch gekennzeichnet, daß ein Anschlag an einem Ende des Schlitzes oder der Ausnehmung vorgesehen ist, um die Einführung des lichtdurchlässigen Elementes darin zu beschränken.

6. Fluidbehälter nach Anspruch 5, dadurch gekennzeichnet, daß der Schlitz oder die Ausnehmung langgestreckte Seitenabschnitte aufweist, die von einem Flansch 18 gebildet werden, der eine langgestreckte U-förmige Lippe (20) besitzt, hinter welcher eine Lippe (26) in Eingriff steht, die die Seiten- und Bodenkanten des lichtdurchlässigen Elementes bildet.

7. Fluidbehälter nach einem der vorhergehenden Ansprüche, dadurch gekennzeichnet, daß ein Schwimmerelement (33) im Innenraum (32) des lichtdurchlässigen Elementes (12) zwischen dem Element und der angrenzenden Wand (16) des Behälters gehalten wird.

8. Fluidbehälter nach einem der vorhergehenden Ansprüche, dadurch gekennzeichnet, daß der Schlitz oder die Ausnehmung (24) für das lichtdurchlässige Element (12) auf einem peripheren Wandabschnitt (16) des Behälters angeordnet ist, der in einer Zone zwischen zwei benachbarten Montageansätzen (48) einer Reihe von in Umfangsrichtung im Abstand voneinander angeordneten Montageansätzen in der Zone eines oberen Randes (54) des Behälters gelegen ist.

9. Fluidbehälter nach Anspruch 8, kombiniert mit einem oberen Körper, an welchem der Behälter von unten befestigt ist, dadurch gekennzeichnet, daß die beiden genannten Montageansätze (48) Mitglieder einer Gruppe von wenigstens zwei in Umfangsrichtung im Abstand voneinander angeordneten Ansätzen (48) an einem Rand des Behälters vom Eingriff mit einer Gruppe von wenigstens zwei im Abstand voneinander angeordneten Ansätzen (50) in einem Wandbereich des oberen Körpers sind, der koaxial in bezug auf den Behälterrand verläuft, um den Behälter durch Aufbringen seiner Ansätze (48) über die Ansätze (50) des Körpers abzustützen, daß eine Mehrzahl von Anschlagelementen (66, 68) vertikal aus einem oder mehreren der Ansätze (48, 50) für die Zusammenwirkung mit dem Ansatz oder den Ansätzen hervorragt, die mit ihm (ihnen in Eingriff stehen, wenn der Behälter und der Körper aneinander befestigt sind, daß wenigstens zwei in Umfangsrichtung im Abstand voneinander angeordnete Elemente (66, 68) vorgesehen sind, die auf verschiedene Höhen hervorragen und daß die jeweiligen Gruppen von Ansätzen (48, 50) während des Zusammenbaus auf entsprechende Höhen in Stellung bringbar sind, welche zulassen, daß die Ansätze einer Gruppe an dem oder den kleineren Element(en) (66) vorbeilaufen können, wenn eine Relativdrehung zwischen dem Körper und dem Behälter in einer Richtung erfolgt, wobei das (die) größere(n) Element(e) (68) als Anlageanschlag dient (dienen), der (die) die Relativdrehung beschränk(t), (en), sodaß nach Durchtreten des (der) kleineren Elemente(s) der Anschlag die Drehungsausrichtung der zusammenwirkenden Ansätze für den Wechseleingriff zur Abstützung des Behälters bestimmt, wobei das kleine Element (die kleineren Elemente) (66) dann auf einem Ansatz oder auf mehreren Ansätzen mit dem (den) in Eingriff stehenden Ansatz (Ansätzen) zusammenwirken, um eine Drehung entgegengesetzt zu der genannten einen Richtung zu verhindern, sodaß der Behälternur entfernt werden kann, wenn eine vertikale Bewegung erfolgt, die zuläßt, daß das (die) kleinere(n) Element(e) von dem (den) zusammenwirkenden Ansatz (Ansätzen) freigesetzt wird (werden), und daß der Rand und die Wandzone des oberen Körpers mit radial gegenüberliegenden Flächen versehen sind, zwischen welchen Gleit-Dichtungseinrichtungen (52) gelagert sind, um eine Dichtung während der relativen vertikalen Bewegungen aufrechtzuerhalten, die zulassen, daß die Ansätze an den Anschlag elementen vorbeilaufen.

10. Fluidbehälter und oberer Körper nach Anspruch 9, dadurch gekennzeichnet, daß die Ansätze (48, 50) jeder Gruppe von Ansätzen in gleichen Abständen in Umfangsrichtung des Behälters oder des oberen Körpers angeordnet sind.

FIG.1

FIG.5

FIG. 2

FIG. 3

FIG.3a

FIG.4